(19) Europäisches Patentamt
European Patent Office
Office européen des brevets

(11) Publication number: **0 124 891**
**A2**

(12) # EUROPEAN PATENT APPLICATION

(21) Application number: 84105030.5

(22) Date of filing: 04.05.84

(51) Int. Cl.³: A 23 L 1/34
A 23 F 5/40, A 23 F 5/14
A 23 F 3/14, A 23 L 1/172
C 12 G 3/00

(30) Priority: 04.05.83 JP 78562/83
04.05.83 JP 78563/83
08.07.83 JP 124244/83
08.07.83 JP 124245/83
01.09.83 JP 160879/83

(43) Date of publication of application:
14.11.84 Bulletin 84/46

(84) Designated Contracting States:
AT BE CH DE FR GB IT LI LU NL SE

(71) Applicant: Suntory Limited
1-40 Dojimahama 2-chome Kita-ku
Osaka-shi Osaka-fu 530(JP)

(72) Inventor: Suwa, Yoshihide
7-16, Yamatedai 6-chome
Ibaraki-shi Osaka(JP)

(72) Inventor: Kobayashi, Takumi
1-10, Himuro-cho 1-chome
Takatsuki-shi Osaka(JP)

(72) Inventor: Kiyota, Noriko
14-4, Aoyamadai 4-chome
Suita-shi Osaka(JP)

(72) Inventor: Yoshizumi, Hajime
6-1-612, Kosobe-cho 2-chome
Takatsuki-shi Osaka(JP)

(74) Representative: Hansen, Bernd, Dr.rer.nat. et al,
Hoffmann, Eitle & Partner Patentanwälte Arabellastrasse 4
D-8000 München 81(DE)

(54) **Antimutagenic agent and method of inactivating the mutagenicity of foods and beverages by using said agent.**

(57) A method of reducing or eliminating the mutagenicity of foods and beverages by causing an antimutagenic substance to act on them is disclosed. The antimutagentic substance is selected from the group consisting of wheat germ, barley malt, soybean, powders thereof, rice bran and extracted fractions thereof. An antimutagenic agent for use in this method which contains one of these antimutagenic substances as the effective ingredient is also disclosed.

EP 0 124 891 A2

Croydon Printing Company Ltd.

40 235 u/wa
0124891

# ANTIMUTAGENIC AGENT AND METHOD OF INACTIVATING THE MUTAGENICITY OF FOODS AND BEVERAGES BY USING SAID AGENT

The present invention relates to an antimutagenic agent capable of reducing or eliminating the mutagenicity of foods and beverages, as well as a method of inactivating the mutagenicity of foods and beverages by using said agent. The antimutagenic agent used in the present invention is produced from wheat germ, barley malt, soybeans, powders thereof, rice bran including rive germ, and extracted fractions thereof.

Most of the cancers that attack humans are said to originate from carcinogenic factors present in their living environment. Only about 2% of human cancers can be explained on a hereditary basis (Higginson, J. & Muir, C.S.: J. Natl. Cancer Inst., Vol. 63, 1291, 1979). Cancers now account for about one fourth to one fifth of the causes of human death, and there is a great accumulation of epidemiological data that supports the hypothesis that the foods and beverages we ingest every day may be the archcriminal of human cancers.

One of the methods for determining carcinogenicity that have recently been established is the Salmonella test (also known as the Ames test) that uses the requirement for histidine as an evaluation index (Ames, B.N. et al.: Mutation Res., Vol. 31, 347, 1975). Many research institutes checked the mutagenicity of compounds by the Ames method and have confirmed that the correlation of the result with their carcinogenicity is as high as 80 to 90% (McCann, J. et al.: Proc. Natl. Acad. Sci. (U.S.A.), Vol. 72, 5153, 1975; Maron, D.M. and Ames, B.N.: Mutation Res., vol. 113, 173, 1983).

Therefore, eliminating mutagens would be of great help in protecting humans from the risk of cancer development. Furthermore, mutation is the result of damage to chromosomes and DNA, and mutagens will have certain adverse

0124891

effects on human health even if they do not cause cancers. This is why foods and beverages that can be ingested without the fear of mutagenicity are desired in modern life.

Mutagens that have been proved to be present in foods and beverages include benzo(a)pyrene, aflatoxin $B_1$, 2-aminofluorenone, benz(a)anthracene, chrysene, dimethylnitrosoamine, β-naphthylamine, nitrosopyrrolidine and methylglyoxal, and many of these have been demonstrated to have carcinogenicity as well as mutagenicity. However, people are unable to do without common foods and beverages even if they have been proved to contain mutagens, and putting a legal ban on their daily intake is certainly out of the question. A particular problem here is that tobacco and beverages that are daily taken in not for their nutritive values but for their refreshing and soothing effects often have higher levels of mutagenicity than daily foods and beverages, as shown in Table 1 below.

Table 1

| | No. of revertants/$10^8$ survivors* |
|---|---|
| one cigarette | 5,500 (TA 98, +**) |
| a cup of instant coffee (150 ml) | 45,000 (TA 100, -) |
| a cup of regular coffee (150 ml) | 195,000 (TA 100, -) |
| a cup of black tea (150 ml) | 38,000 (TA 100, -) |
| a cup of green tea (150 ml) | 21,000 (TA 100, -) |
| a cup of *sencha* | 17,000 (TA 100, -) |

*Salmonella typhimurium strain TA 100 or TA 98 was used.

**+ indicates the presence of a rat liver homogenate (S9 mix) and - indicates the absence of the mix.

In fact, several researchers have reported some degree of correlation between tobacco and cancers of the mouth, pharynx, larynx, esophagus, stomach and lungs, between coffee and cancers of the pancreas and bladder, and between alcoholic beverages and cancers of the esophagus and liver.

The present invention provides a method of eliminating or attenuating the mutagenicity of foods and beverages, thereby increasing their safety and even restoring the confidence that they can be ingested without causing any

hazard to human health.

The advantages of the present invention are hereunder described with particular reference made to coffee which is known to have a significantly high level of mutagenicity. According to the literature, the history of coffee as a daily beverage started in Arabia in the 14th century. Since then, the demand for coffee as a daily beverage has inreased as human society has become more and more sophisticated. In Japan, too, the comsumption of coffee has seen a triple increase in the period between 1969 and 1979.

However, several scientists have recently cast doubt on the safeness of coffee and this is at least partly responsible for the relatively low U.S. consumption of coffee in 1982. The finding of cytotoxicity of caffeine and its correlation with cancers created a great sensation in coffee-drinking countries such as the U.S.A. and European countries. A paper that aroused special concern was that of Dr. MacMahon who confirmed the correlation between the habit of coffee drinking and cancer of the pancreas (MacMahon, B. et al., N. Engl. J. Med., Vol. 304, 630, 1981). Inferior urinary organs such as the bladder are organs in which the incidence of cancer increased as a result of coffee drinking (Simon, D. et al., J. Natl. Cancer Inst., vol. 54, 587, 1975). There are also reports that coffee increases the chance of development of leukemia and cancers of the prostate and ovary. In any event, further studies have to be made on the correlation of coffee and its carcinogenicity.

As shown in Table 1 above, the mutagenicity of coffee is strikingly higher than that of other beverages and even tobacco. Since coffee is a favorite beverage for many people and its current consumption is high, top priority should be given to eliminating from coffee every possible hazard to human health. Many researchers have made studies in this respect and have produced impressive results. For example, peroxidase, thiol compounds and selenium compounds have been reported to have the ability to inactivate the mutagenicity of Trp-P-1, N-methyl-N'-nitro-N-nitrosoguanidine

and 7,12-dimethylbenzanthracene, respectively (Martin, S.E. et al.: Mutation Res., Vol. 82, 41, 1981). However, many of the inactivators known today are either toxic to the living body or unsuitable for daily intake due to their poor palatability.

In order to solve the problems described above, we have made various efforts and found that wheat germ, barley malt, soybeans, powders thereof, rice bran and extracted fractions thereof (these are hereunder collectively referred to as germ preparations) have a great ability to inactivate the mutagenicity of foods and beverages such as coffee, black tea, and bourbon whiskey. The present invention has been accomplished on the basis of this finding.

Therefore, the present invention relates to a method of inactivating the mutagenicity of foods and beverages by causing the germ preparations to act on them. The present invention also relates to an antimutagenic agent comprising such germ preparations. The present invention aims not only at reducing or eliminating the mutagenicity of foods and beverages but also at reducing their cytotoxicity.

Fig. 1 is a graph showing the ability of wheat germ preparations to suppress the mutagenicity of regular coffee to Salmonella typhimurium TA 100 wherein Fig. 1(a) shows the result with a wheat germ powder and Fig. 1(b) refers to the result with a powder of wheat germ extract. In Fig. 1, the curve connecting solid dots indicates data for an untreated coffee; the curve connecting partially solid dots indicates data for a coffee powder containing 8% (w/w) of wheat germ powder or 1.6% (w/w) of a powder of wheat germ extract; and the curve connecting open dots indicates data for a coffee powder containing 62.5% (w/w) of a wheat germ powder or 12.5% (w/w) of a powder of wheat germ extract.

Fig. 2 is a graph showing the ability of wheat germ preparations to suppress the mutagenicity of instant coffee which develops in Salmonella typhimurium TA 100 wherein Fig. 2(a) shows the result with a wheat germ powder and

Fig. 2(b) refers to the result with a powder of wheat germ extract. In Fig. 2(a) and (b), the three curves have the same meaning as defined for Fig. 1.

Fig. 3(a) is a bar graph showing the relation between the cytotoxicity of three types of coffee against Chinese hamster lung fibroblasts. The cells were treated with each type of coffee in a concentration of 10 mg/ml. In Fig. 3, arrows indicate the result with the coffee containing no wheat germ preparation; dotted bars indicate the result with the coffee containing a wheat germ powder; and hatched bars indicate the result with the coffee containing a powder of wheat germ extract.

Fig. 3(b) is a graph showing the ability of wheat germ preparations to eliminate the cytotoxicity of instant coffee to intestinal cells of normal human fetus (Flow 11000). In Fig. 3(b), the curve connecting solid dots indicates data for untreated coffee; and the curve connecting open dots indicates data for coffee containing the powder of wheat germ extract (5 mg/ml medium).

Fig. 4 is a graph showing the ability of wheat germ preparations to decrease the mutagenicity of black tea caused in Salmonella typhimurium TA 100. In Fig. 4, the curve connecting solid dots indicates data for an untreated black tea; the curve connecting open dots indicates data for a black tea containing a powder of wheat germ extract (2.75 mg/ml); and the curve connecting open triangles indicates data for a black tea containing a wheat germ powder (55 mg/ml).

Fig. 5 is a graph showing the ability of wheat germ preparations to reduce the mutagenicity of bourbon whiskey caused in Salmonella typhimurium TA 100. In Fig. 5, the curve connecting solid dots indicates data for an untreated bourbon whiskey; the curve connecting open dots indicates data for a bourbon whiskey containing a powder of wheat germ extract (2.75 mg/ml); and the curve connecting open triangles indicates data for a bourbon whiskey containing a wheat germ powder (55 mg/ml).

Fig. 6 is a graph showing the ability of a powder of

wheat germ extract to inactivate the mutagenicity of 4-nitroquinoline 1-oxide (4NQO) caused in Salmonella typhimurium TA 100. In the experiment conducted to obtain this data, 4NQO was used in a fixed concentration (0.12 μg/plate).

Fig. 7 is a graph showing the ability of a powder of wheat germ extract to inactivate the mutagenicity of 2-(2-furyl)-3-(5-nitro-2-furyl)acrylamide (AF-2) caused in Salmonella typhimurium TA 100. The concentration of AF-2 was fixed at 0.02 μg/plate in the experiment conducted to obtain this data.

Fig. 8 is a graph showing the ability of a wheat germ powder to inactivate the mutagenicity of methylglyoxal (MG) caused in Salmonella typhimurium TA 100. In the experiment, the concentration of MG was fixed at 0.05 μl/plate.

Fig. 9 is a graph showing the ability of germ preparations to suppress the mutagenicity of regular coffee caused in Salmonella typhimurium TA 100. Fig. 9(a) shows the result with a barley malt powder and a dried powder of extracted barley malt fraction; Fig. 9(b) shows the result with a soybean powder and a dried powder of extracted soybean fraction; Fig. 9(c) shows the result with rice bran and a dried powder of extracted rice bran. In Fig. 9, the curves connecting solid dots indicate data for untreated coffee; the curves connecting ▲ , ▼ and ■ respectively indicate data for coffee samples containing 20% (w/w) of barley malt powder, soybean powder and rice bran; and the curves connecting △, ▽ and □ respectively indicate data for coffee samples containing 4% (w/w) of dried powders of extracted barley malt, soybean and rice bran fractions.

Fig. 10 is a graph showing the ability of germ preparations to suppress the mutagenicity of instant coffee caused in Salmonella typhimurium TA 100. Fig. 10(a) shows the result with a barley malt powder and a dried powder of extracted barley malt fraction; Fig. 10(b) shows the result with a soybean powder and a dried powder of extracted soybean fraction; and Fig. 10(c) shows the result with rice bran and a dried powder of extracted rice bran.

The respective curves in Fig. 10 have the same meaning as defined for Fig. 9.

Fig. 11 is a graph showing the ability of germ preparations to reduce the mutagenicity of black tea caused in *Salmonella typhimurium* TA 100. The curves connecting solid dots indicate data for untreated black tea; the curves connecting ▲ , ▼ and ■ respectively indicate data for black tea samples containing 20% (w/w) of barley malt, soybean powder and rice bran; and the curves connecting △ , ▽ and □ respectively indicate data for black tea samples containing 4% (w/w) of dried powders of extracted barley malt, soybean and rice bran fractions.

Fig. 12 is a graph showing the ability of germ preparations to reduct the mutagenicity of bourbon whiskey caused in *Salmonella typhimurium* TA 100. The curves connecting solid dots indicate data for untreated bourbon whiskey; the curves connecting ▲ , ▼ and ■ respectively indicate data for bourbon whiskey samples containing 20% (w/w) of barley malt powder, soybean powder and rice bran; and the curves connecting △ , ▽ and □ respectively indicate data for bourbon whiskey samples containing 4% (w/w) of dried powders of extracted barley malt, soybean and rice bran fractions.

The advantages of the germ preparations according to the present invention are hereunder described with particular reference made to their ability to reduce or completely inactivate the mutagenicity of coffee. However, it should be understood that beverages whose mutagenicity can be inactivated by the germ preparations of the present invention are by no means limited to coffee.

The amount of the germ preparation required to suppress the mutagenicity of coffee is from 0.25 to 10 mg, preferably from 0.25 to 2.5 mg, in terms of wheat germ powder, barley malt powder, soybean powder or rice bran (these will be hereunder referred to as the germ powder), and from 0.05 to 5 mg, preferably from 0.05 to 0.5 mg in terms of a powder of extracted wheat germ, barley malt, soybean or rice bran fraction (these will be hereunder referred to as the

extracted germ powder) for 1 ml of a solution with a concentration normal to ordinary persons (5 - 20 mg of coffee powder per ml). These amounts are sufficient for achieving the results to be described later in this invention. In our experiments, we used wheat germ after roasting it at 150°C for 10 min in order to improve its palatability. If it is used in its raw state, the capability of inactivating mutagenicity and cytotoxicity is 5 - 10 times that of the roasted germ, and the necessary amount for the inactivation would be one fifth to one tenth of the latter. However, if these germ powders or extracted germ powders are added to hot coffee, a decrease in their activity will be inevitable above 80°C, and in order to ensure the desired effect, the stated amounts of their addition should be doubled or either tripled. By using the germ powder or extracted germ powder in the amounts stated above, the mutagenicity of coffee to Salmonella typhimurium can be reduced by at least half, and can even be eliminated completely.

The germ preparation according to the present invention may be added to coffee in various methods; it may be blended with roasted, either milled or unmilled, coffee beans (to make regular coffee), or it may be added to the coffee solution extracted from roasted coffee beans (to make liquid coffee or canned coffee), or it may be uniformly mixed with a spray-dried or freeze-dried coffee powder (to make instant coffee) or a liquid form of the germ preparation may be sprayed onto coffee powder by granulation in a fluidized bed (also to make instant coffee).

The coffee whose mutagenicity has been reduced or completely inactivated by the method of the present invention retains its initial flavor and can be drunk every day without increasing hazards to human health.

The germ preparation used in the mehtod of the present invention is sufficiently effective in inactivating the mutagenicity of coffee. However, if this preparation is loaded with temperatures of 80°C or higher immediately after adding it to coffee, the mutagenicity of coffee may develop again, and if the preparation is subjected to 120°C for a

period of 20 minutes or longer, nearly 90% of coffee's mutagenicity will be restored. Since coffee is usually served hot, it is desired to ensure that the mutagens in coffee are permanently inactivated. As a result of various studies made to achieve this object, we have succeeded in inactivating permanently the mutagenicity of coffee by incorporating the germ preparation in it in the presence of hydrogen peroxide, or more preferably, by leaving the coffee-germ preparation to stand at a temperature below 80°C, preferably 70°C for a sufficient period of time to irreversibly inactivate the mutagenicity. For example, when the preparation comprises 15 mg of coffee powder/ml and 2 mg of wheat germ extract powder/ml, it is sufficient to let it stand at 20°C for 1.5-2.0 hours for the irreversible inactivation.

As already mentioned, the amount of the germ preparation required to suppress the mutagenicity of coffee is from 0.25 to 10 mg, preferably from 0.25 to 2.5 mg, in terms of wheat germ powder, barley malt powder, soybean powder or rice bran, and from 0.05 to 5 mg, preferably from 0.05 to 0.5 mg, in terms of a powder of extracted wheat germ, barley malt, soybean or rice bran fraction, for 1 ml of a solution with a concentration which is normal to ordinary persons (i.e., 5 - 20 mg of coffee powder per ml). The necessary amount of hydrogen peroxide will range from 0.03 to 4 mM, but it may be used in excess of this amount. By using hydrogen peroxide in combination with the germ preparation, the mutagenicity of coffee can be reduced to about 50% of the initial level, or it can be eliminated almost completely. The mutagens in coffee that has been once suppressed will not revive even if the coffee is subsequently heated. When hydrogen peroxide is used, instant coffee rather than regular coffee is preferred and may be produced by the following procedure: the germ preparation and hydrogen peroxide are added to the coffee solution extracted from roasted coffee beans, and after optional filtration, the mixture is reduced into particles by spray-drying or freeze-drying. The hydrogen peroxide may be removed from the coffee by heat treatment or during the formation of dry particles.

The germ preparation of the present invention is capable of inactivating the mutagenicity of black tea and straight bourbon whiskey as well as that of coffee. A powder of the germ preparation may be mixed with fire-dried tea leaves, or the germ preparation may be deposited on tea leaves by granulation in a fluidized bed. Alternatively, the germ preparation either in a powder or solution form may be added to black tea just before drinking. By either method, the mutagenicity of balck tea can be sufficiently reduced. The mutagenicity of bourbon whiskey can also be inactivated either by incorporating the germ preparation in bottled whiskey or by adding a powder or solution of the germ preparation to a glass of whiskey. For incorporation in bottled bourbon whiskey, extracted fractions of wheat germ, barley malt, soybean or rice bran are preferably used so as not to impair the appearance and other factors that affect the commercial value of the product.

The extracted germ powder is typically used in an amount of 0.05 to 5 mg per ml of black tea having a concentration usual to ordinary persons, whereas 0.05 to 2 mg of the powder is usually added to 1 ml of bourbon whiskey.

The advantages of the present invention will become apparent by reading the following examples, to which the scope of the invention is by no means.

Example 1: Use of Wheat Germ Preparations

I) Measuring mutagenicity and the antimutagenic effect

(i) Method:

The preincubation method described in Sugimura & Nagao: Chemical Mutagens, Vol. 6, p. 41, 1981 was used.

(ii) Microorganism:

Histidine-requiring *Salmonella typhimurium* TA 100 (hereunder S. TA 100) was used.

(iii) Preparation of samples

(a) Instant coffee:

Instant coffee powder was dissolved in distilled water. Predetermined amounts of wheat germ preparations were also dissolved in distilled water, and 50 μl of each

solution was mixed with an equal amount of the aqueous coffee solution.

(b) Regular coffee:

Roasted coffee beans (20 g) were extracted with hot distilled water (250 ml), and the extract was filtered through coffee filter paper No. 12 manufactured by Kalita Co., Ltd. The extract was freeze-dried, and after measuring the weight of the dry product, it was dissolved in distilled water. Predetermined amounts of wheat germ preparations were also dissolved in distilled water, and 50 μl of each solution was mixed with an equal amount of the aqueous solution of coffee concentrate.

(c) Black tea:

Commercial tea leaves (5-7 g) were brewed with 200 ml of boiling water. The extract was cleared of any tea leaves and dried under vacuum at 40°C in an evaporator. The residue was dissolved in dimethyl sulfoxide (DMSO). Predetermined amounts of wheat germ preparations were also dissolved in distilled water. Each solution of germ preparation was mixed with the tea solution at a ratio of 1:4 to make 100 μl.

(d) Bourbon whiskey:

A commercial straight bourbon whiskey was concentrated to dryness under vacuum at 40°C in an evaporator. The dry residue was dissolved again in DMSO. Predetermined amounts of wheat germ preparations were dissolved in distilled water. Each solution of germ preparation was mixed with the solution of the residue in equal amounts to make 100 1.

(e) Chemical substances:

4-Nitroquinoline 1-oxide (4NQO), methylglyoxal (MG) and 2-(2-furyl)-3-(5-nitro-2-furyl)acrylamide (AF-2) were each dissolved in DMSO. Predetermined amounts of wheat germ preparations were dissolved in distilled water, and each solution was mixed with the DMSO solution of each chemical substance in a ratio of 1:4 to make 100 μl.

(f) Wheat germ preparations:

Wheat germ that separated from grains upon polishing was used in this example either directly or after grinding it into particles with a flour mill. Predetermined amounts

of wheat germ and its powder were dissolved in distilled water for use in the experiment. A powder of extracted wheat germ was prepared as follows: 1 g of wheat germ was extracted with 10 ml of distilled water at 4°C for 30 minutes; the extract was centrifuged (1,000 G); the supernatant was filtered through a millipore filter (pore size: 0.45 μm); and the filtrate was freeze-dried to form particles. Predetermined amounts of the resulting powder were dissolved in distilled water for use in the experiment.

(iv) Measurement of mutagenicity:

To 100 μl of each of the samples prepared in (iii)(a) to (f), 500 μl of 0.1 M sodium phosphate buffer (pH 7.4) plus 100 μl of a culture of S. TA 100 strain were added. After shaking at 37°C for 20 minutes, each mixture was dissolved in 2 ml of a soft agar solution and spread on a 0.1% glucose agar plate. The soft agar had been supplemented with 0.1 μM/2 ml soft agar/plate of histidine so as to cause several mitosis of cells on the plate. After incubation at 37°C for 48 hours, the number of colonies forming on the plate was counted as revertants. The percent inhibition of mutagenicity can be calculated by the following formula, if necessary:

Percent inhibition

$$= \left(1 - \frac{\text{Number of colonies on plate containing wheat germ preparation}}{\text{Number of colonies on untreated plate}}\right) \times 100\ (\%)$$

(v) Measurement of cytotoxicity:

Chinese hamster lung fibroblasts or CHL cells (5 x 104) were transferred onto VAMEM or an MEM medium supplemented with vitamins, amino acids and 10% fetal bovine serum, and incubation was made at 37°C for 48 hours in 5% $CO_2$ atmosphere. A flat-bottom (5.5 $cm^2$) tube was used as an incubator. The cells were treated for 3 hours with predetermined concentrations of sample with 1 ml of VAMEM containing 3.5% fetal bovine serum. After the treatment with sample, the CHL cells were washed once with VAMEM and twice with a phosphate buffer (135 mM NaCl, 2.7 mM KCl, 5.3 mM $Na_2HPO_4$,

and 1.45 mM $KH_2PO_4$). The cells were removed by treatment with trypsin, and 200 to 400 cells were transferred to a petri dish (60 mm$^{\phi}$) and incubated in 5 ml of VAMEM containing 10% fetal bovine serum. The plating efficiency was checked on the 7th day of the incubation.

Fetal human intestinal cells (Flow 11000, 3 x $10^5$ cells) were transferred onto MEM (Hanks) medium supplemented with 10 % fetal bovine serum FBS, and were incubated at 37°C overnight in 5 % $CO_2$ atmosphere. Then, the medium was changed to MEM (Earle) medium supplemented with 10 % FBS, and the cells were further incubated for 48 hours. The cells were treated for 3 hours with predetermined concentrations of sample, and were incubated overnight in MEM (Hanks) medium supplemented with 10 % FBS after being washed with MEM (Earle) medium. Then, the cells were washed again with MEM (Earle) medium, and were treated with 0.25 % trypsin. After the centrifugation at 1,000 g for 5 minutes in MEM (Earle) medium supplemented with 10 % FBS, The cells were stained with 0.15 % trypanblue in MEM (Earle) medium supplemented with 5 % FBS. Surviving cells and dead cells were counted with microscopy.

The percent survival of the cells was determined by the following formula:

Percent survival

$$= \frac{\text{Plating efficiency of treated cells}}{\text{Plating efficiency of untreated cells}} \times 100\ (\%)$$

(vi) Measurement of the concentration of hydrogen peroxide in coffee

The concentration of hydrogen peroxide in coffee was determined by measuring the concentration of oxygen which was generated from catalase treated hydrogen peroxide as shown in the following reaction.

$$2H_2O_2 \xrightarrow{\text{catalase}} 2H_2O + O_2$$

Electrode for oxygen (Type DG-5) and reaction system (Type BOM-11) were obtained from Ishikawa Seisakusho Ltd. Catalase prepared from bovine liver was purchased from P-L biochemicals, Inc. USA. The method we used was able to detect as little as 0.2 ppm of hydrogen peroxide. However,

the method of detecting it by measuring the amount of iodide released from potossium iodide in the presence of molybdate ion could hardly detect even 30 ppm of hydrogen peroxide.

II) Results

(i) Efficacy of wheat germ preparations against the mutagenicity of coffee

(a) Regular coffee (freshly brewed coffeè):

A powder of extracted coffee beans (15 mg) as prepared by the method shown in I)(iii)(b) was dissolved in distilled water to make 50 μl. Predetermined amount of wheat germ preparations were dissolved or suspended in distilled water to make a total of 50 μl, and each solution was mixed with the aqueous solution of coffee extract. After leaving the mixture to stand at room temperature for 20 minutes, 0.5 ml of 0.1 M sodium phosphate buffer (pH 7.4) and 0.1 ml of a culture of S. TA 100 were added sequentially. The mutagenicity of each mixture was determined by the method shown in I)(i). The results are shown in Fig. 1.

The greater part of the mutagenicity of regular coffee could be inactivated by incorporating 8% (w/w) of wheat germ or its powder, of 1.6% (w/w) of a powder of extract from germ with respect to the extracted coffee powder. For complete inactivation of the mutagenicity, the extract coffee powder must be mixed with 62.5% of wheat germ or its powder, or 12.5% of a powder of extracted wheat germ.

(b) Instant coffee:

Samples of commercial soluble instant coffee (1.5 mg, 3.75 mg, 7.5 mg, 11.25 mg and 15.0 mg) were dissolved in distilled water to make solutions each weighing 50 μl. Predetermined amounts of wheat germ preparations were also dissolved in distilled water to make 50 μl, and each solution was mixed with the aqueous coffee solutions. To each mixture, 0.1 M phosphate buffer (pH 7.4) and 100 μl of a culture of S. TA 100 were added, and the mutagenicity of instant coffee was determined as in (a). The results are shown in Fig. 2.

As in the case of regular coffee, the mutagenicity of

instant coffee was markedly reduced or completely eliminated by addition of wheat germ preparations. The greater part of the mutagenicity of instant coffee could be inactivated by incorporating 8% (w/w) of wheat germ or its powder, or 1.6% (w/w) of a powder of extracted wheat germ with respect to the coffee powder. For complete inactivation of its mutagenicity, coffee powder must be mixed with 62.5% of wheat germ or its powder, or 12.5% of a powder of extracted wheat germ.

The once inactivated mutagenicity of coffee, whether regular or instant type, did not revive upon addition of S9 mix, or the combination of a 9000-g supernatant of rat liver homogenate and a reduced nicotinic acid amide adenine dinucleoside (NADPH) producing system.

(ii) Efficacy of wheat germ preparations against the mutagenicity of black tea

As shown in Fig. 4, the tea samples prepared by the method shown in I) (iii)(c) is mutagenic to S. TA 100 (ca. 200 revertants/$10^8$ survivors per ml). This mutagenicity could be reduced to less than a half by adding a wheat germ powder and a powder of extracted wheat germ to give respective concentrations of 55 mg/ml (tea) and 2.75 mg/ml (tea).

(iii) Efficacy of wheat germ preparations against the mutagenicity of straight bourbon whiskey

As shown in Fig. 5, the straight bourbon whiskey samples prepared by the mehtod shown in I) (iii)(d) is highly mutagenic in S. TA 100 (ca. 800 revertants/$10^8$ survivors). By adding 55 mg/ml (straight bourbon) of a wheat germ powder and 2.75 mg/ml (straight bourbon) of a powder of extracted wheat germ, the mutagenicity levels of the samples were reduced to 21.6% and 32.5%, respectively.

(iv) Efficacy of wheat germ preparations against the mutagenicity of 4NQO, AF-2 and MG

4NQO is a carcinogen that induces cancer in the skin, lungs or stomach; AF-2 is also a carcinogen that induces cancer in the stomach; and MG (methylglyoxal) is a mutagen that has been proved to be present in coffee. Wheat germ preparations according to the present invention exhibit a strong antimutagenicity against these substances. When 3 mg

of a powder of extracted wheat germ was added to each of 4NQO (0.125 μg) and AF-2 (0.02 μg), their mutagenicity levels were inactivated by 93.7% and 68.1%, respectively. When 50 mg of wheat germ was added to 0.05 μl of MG, its mutagenicity was inactivated by 92.3%. For the efficacy against the three mutagens, see Figs. 6, 7 and 8.

(v) Cytotoxicity of coffee as suppressed by wheat germ preparations

The cytotoxicity of three different types of coffee (standard instant type, decaffeinated instant type and regular type) against CHL cells was examined by the method shown in I)(v). As shown in Fig. 3(a), each type of coffee having a concentration of 10 mg/ml on a dry basis killed 99.9% or 100% of the CHL cells. However, 55% to 61% of the cells survived when 50% (w/w) of a wheat germ powder or 10% (w/w) of a powder of extracted wheat germ was added to the coffee.

This elimination of cytotoxicity was confirmed also in normal human intestinal cells (Flow 11000). As shown in Fig. 3(b), more than 90 % of human cells died at the concentration of 10 mg coffee powder/ml. The addition of a powder of extracted wheat germ (5 mg/ml of coffee) showed the ability to detoxify the cytotoxicity of coffee markedly.

Example 2: Use of Barley Malt, Soybean or Rice Bran

The procedure of Example 1 was repeated except that the barley malt, soybean and rice bran prepared as shown below were used as germ preparations and that no experiment was conducted with 4NQO, AF-2 and MG. Water-insoluble germ preparations were used in the form of aqueous suspensions rather than solutions.

Preparing germ preparations

Rice bran that separated from rice grans as a result of polishing was used. Barley wheat and soybean powders were prepared by grinding barley malt and soybean in a mill. Predetermined amounts of rice bran, barley malt and soybean were dissolved or suspended in distilled water. Dried powders of the extracted fractions of rice bran, barley malt and soybean were prepared as follows: 1 g of each substance

was extracted with 10 ml of distilled water at 4°C for 30 minutes; the extract was centrifuged (1,000 G); the supernatant was filtered through a millipore filter (pore size: 0.45 μm); and the filtrate was freeze-dried to form particles. Predetermined amounts of the so prepared dry particles of extracts were dissolved or suspended in distilled water for use in the experiment.

To 100 μl of each of the samples prepared as in Example 1, I)(iii)(a) to (d), 500 μl of 0.1 M sodium phosphate buffer (pH 7.4) plus 100 μl of a culture of S. TA 100 were added. After shaking at 37°C for 20 minutes, each mixture was dissolved in 2 ml of a soft agar solution and spread on a 0.1% glucose agar plate. The soft agar had been supplemented with 0.1 M/2 ml soft agar/plate of histidine so as to cause several mitosis of cells on the plate. After incubation at 37°C for 48 hours, the number of colonies forming on the plate was counted as revertants. The percent inhibition of mutagenicity can be calculated by the following formula, if necessary:

$$\text{Percent inhibition} = \left(1 - \frac{\text{Number of colonies on plate containing germ preparation}}{\text{Number of colonies on untreated plate}}\right) \times 100\ (\%)$$

Results

(i) Efficacy of germ preparations against the mutagenicity of coffee

(a) Regular coffee:

A powder of extracted coffee beans (15 mg) as prepared by the method shown in Example 1, I)(iii)(b) was dissolved in distilled water to make 50 μl. Predetermined amounts of germ preparations were dissolved or suspended in distilled water to make a total of 50 μl, and each solution was mixed with the aqueous solution of coffee extract. After leaving the mixture to stand at room temperature for 20 minutes, 0.5 ml of 0.1 M sodium phosphate buffer (pH 7.4) and 0.1 ml of a culture of S. TA 100 were added sequentially. The mutagenicity of each mixture was determined by the

mehtod shown in Example 1, I)(i). The results are shown in Fig. 9.

The greater part of the mutagenicity of regular coffee can be inactivated by incorporating 5% (w/w) of barley malt, soybean or rice bran or 1.0% (w/w) of a dried powder of extracted barley malt, soybean or rice bran with respect to the extracted coffee powder. For complete inactivation of the mutagenicity, 20% of barley malt, soybean or rice bran or 4% of a dried powder of extracted barley malt, soybean or rice bran is necessary.

(b) Instant coffee:

Germ preparations were checked for their abiility to suppress the mutagenicity of commercial soluble instant coffee samples by repeating the procedure used with regular coffee. The results are shown in Fig. 10. As in the case of regular coffee, the mutagenicity of instant coffee was markedly reduced or completely eliminated by addition of germ preparations. The greater part of the mutagenicity of instant coffee could be inactivated by incorporating 5% (w/w) of barley malt powder, soybean powder or rice bran, or 1% (w/w) of a dried powder of extracted barley malt, soybean or rice bran fraction, with respect to the coffee powder. For complete inactivation of the mutagenicity, 20% of barley malt or soybean powder, or 4% of a dried powder of extracted barley malt or soybean fraction is necessary. For achieving the same result, 30% of rice bran or 6% of a dry powder of extracted rice bran fraction is necessary.

The once inactivated mutagenicity of coffee, whether regular or instant type, did not revice upon addition of S9 mix, or the combination of a 9000-g supernatant of rat liver homogenate and a reduced nicotinic acid amide adenine dinucleoside (NADPH) producing system.

(ii) Efficacy of germ preparations against the mutagenicity of black tea

As shown in Fig. 11, the tea samples prepared by the method shown in Example 1, I)(iii)(c) caused high mutagenicity in S. TA 100 (ca. 200 revertants/$10^8$ survivors). This This mutagenicity could be significantly reduced by adding

barley malt, soybean or rice bran to give a concentration of 20%, or by adding a dried powder of extracted barley malt, soybean or rice bran fraction in a concentration of 4%.

(iii) Efficacy of germ preparations against the mutagenicity of straight bourbon whiskey

As shown in Fig. 12, the straight bourbon whiskey samples prepared by the method shown in Examole 1 I)(iii)(d) caused high mutagenicity in S. TA 100 cells (ca. 800 revertants/$10^8$ survivors). By adding 20% (w/w) of a barley malt powder, soybean powder or rice bran, or by adding 4% (w/w) of a dried powder of extracted barley malt, soybean or rice bran fraction, about 40 to 85% of the mutagenicity of straight bourbon whiskey was inactivated.

Example 3: Using Germ Preparations in the Presence of Hydrogen Peroxide

The ability of germ preparations to suppress the mutagenicity of instant coffee was determined by repeating the procedure of Example 1 using the samples that were prepared as follows.

Preparation of samples

(a) Souble instant coffee was dissolved in either aqueous hydrogen peroxide or distilled water. Predetermined amounts of germ preparations were also dissolved in distilled water to make 50 μl, and each solution was mixed with 50 μl of coffee solution in either aqueous the hydrogen peroxide or distilled water.

(b) Germ preparations:

Wheat germ that separated during polishing was used either immediately or after being grounded into particles by a flour mill. Barley seeds either before or after germination were used as barley malt. Their powders were also used. Soybean powder was used, too. Predetermined amounts of these germ preparations were suspended or dissolved in distilled water for use in the experiment. Powders of germ extract were prepared by the following procedure: 1 g of wheat germ or germ powder was extracted with 10 ml of distilled water or a mixture of water and an organic solvent

(e.g. lower alcohol, acetone or dioxane) for 30 minutes at 4°C; the extract was centrifuged (1,000 G); the supernatant was filtered through a millipore filter (pore size: 0.45 μm); and the extract was freeze-dried to produce a powder. Predetermined amounts of these dried extracts were dissolved in distilled water for use in the subsequent experiment.

Resutls

(i) Efficacy of hydrogen peroxide used in combination with germ preparations in suppressing mutagenicity of coffee

Table 2

| Samples | No. of revertants / plate |
|---|---|
| Coffee* | 411 (100) |
| Coffee* + wheat germ powder (2.75 mg) | 26 (6.3) |
| Coffee* + powder of extracted wheat germ (0.55 mg) | 30 (7.3) |
| Coffee* + powder of extracted wheat germ (0.55 mg) + $H_2O_2$** | 16 (3.9) |
| Coffee* + barley malt powder (2.75 mg) | 41 (10.0) |
| Coffee* + powder of extracted barley malt (0.55 mg) | 28 (6.8) |
| Coffee* + powder of extracted barley malt (0.55 mg) + $H_2O_2$** | 20 (4.9) |
| Coffee* + soybean powder (2.75 mg) | 22 (5.3) |
| Coffee* + powder of extracted soybean (0.55 mg) | 17 (4.1) |
| Coffee* + powder of extracted soybean (0.55 mg) + $H_2O_2$** | 13 (3.2) |

The figures in parentheses indicate the relative values with the number of revertant colonies formed on the plate containing untreated coffee being taken as 100%.

* 15 mg as instant coffee powder

** 3.53 μM.

As Table 2 shows, the mutagenicity of coffee could be substantially inactivated by addition of germ preparations either alone or in combination with hydrogen peroxide. In the experiment conducted in Example 3, the number of spontaneous mutant colonies (control) of S. TA 100 was 107. On the other hand, the number of revertant colonies forming on the plates treated with coffee samples containing the

germ preparations and/or hydrogen peroxide according to the present invention was in the range of 13 to 41, which is significantly lower than 107. Therefore, it can be safely concluded that the mutagenicity of coffee could be substantially inactivated by the present invention. Furthermore, under the conditions used in Example 3, there was not decrease in the number of viable cells of S. TA 100 owing to the cytotoxicity of coffee, and therefore, the observed decrease in the number of revetants was not an apparent loss due to the reduction in the number of viable cells.

In another experiment, coffee samples containing germ preparations and/or hydrogen peroxide were compared with an untreated coffee with respect to their mutagenicity against S. TA 100 (in the presence of S9 mix) and *Salmonella typhimurium* TA 98 (in the absence or presence of S9 mix) strain. There was no increase in the mutagenicity of coffee due to its mixing with germ preparations either in the absence or presence of hydrogen peroxide.

Example 4

A soluble instant coffee (15 mg) was mixed with 1 mg of a dried powder of extracted wheat germ, and to the mixture, 30% aqueous hydrogen peroxide was added in the amounts indicated in Table 3. After standing at room temperature for 30 minutes, the respective samples were autoclaved at 120°C for 20 minutes. The mutagenicity data for the tested samples is also shown in Table 3.

Table 3

(S. TA 100: without S9 mix)

| | no powder of wheat germ extract added | autoclaved (120°C x 20 min.) in the presence of powder of wheat germ extract (mg/ml) | | | | | | |
|---|---|---|---|---|---|---|---|---|
| $H_2O_2$ (μM/ml coffee) | 0 | 0 | 0.04 | 0.4 | 1 | 2 | 3 | 4 |
| Mutagenicity (%) | 100 | 89.6 | 43.4 | 24.2 | 20.7 | 13.5 | 11.3 | 7.7 |

Generation of hydrogen peroxide in coffee and its removal.:

We detected hydrogen peroxide in freshly-brewed and instant coffee by the method described in I) (vi). As shown in Table 2, all brands of coffee showed the presence of hydrogen peroxide. Hydrogen peroxide was generated immediately after pouring water onto coffee powder, and its amount increased rapidly within one hour. The maximum concentration reached in 2 - 3 hours after pouring water. Maximum levels were 30 ~ 50 ppm in coffee made in the ordinary way (5 - 15 mg dry weight/ml). Under anaerobic conditions, hydrogen peroxide did not appear.

The generation of hydrogen peroxide seems to be $O_2$-dependent and a higher degree of roasting enhances its concentration. Hydrogen peroxide is mutagenic (160 revertants/$10^8$ survivors/μmole) to S. TA 100, and is also mutagenic to Neurospera crassa (C. Auerbach and D. Ramsey, Mol. Gen. Genet., Vol, 117,1-13, 1972), and is clastogenic to human cells (A. Tonomura, Proac. E.M.S. Japan, 33, 1981). As for carcinogenicity, 0.1 % of hydrogen peroxide proved to cause malignant tumors in mouse deodenum (A. Ito et al., Grann, Vol. 73, 315-322, 1982).

The addition of 5 mg of dried wheat germ extract almost or completely eliminates hydrogen peroxide in coffee. Therefore, we believe it desinable to add germ preparations to coffee for the purpose of eliminating human hazards which are mutagens, clastogens, cytotoxic substances and carcinogens.

Table 2

| Coffee | Hydrogen peroxide*** μM (ppm) |
|---|---|
| Regular type* | |
| Cinnamon | 168 (5.7) |
| Medium-High | 266 (9.0) |
| Full-City | 507 (17.2) |
| Instant type** | |
| Brand 1 | 240 (8.2) |
| 2 | 168 (5.7) |
| 3 | 156 (5.3) |
| 4 | 145 (4.9) |
| 5 | 183 (6.2) |
| 6 | 8 (0.3) |
| 7 | 96 (3.3) |

* 16.2 mg dry weight/ml: Cinnamon
18.3 mg " : Medium-High
19.3 mg " : Full-City

** 15 mg powder/ml

*** Hydrogen peroxide was measured at 5 minutes after pouring water.

As will be apparent from the foregoing description, the mutagenicity of foods and beverages can be reduced or eliminated by mixing them with the germ preparations according to the present invention. The cytotoxicity of foods and beverages can also be reduced by using the germ preparations. The taste and flavor of beverages will not be impaired by treated them according to the method of the present invention. The vitamins contained in the germ preparations are taken in together with the preparations and may be effectively used to promote human health.

0124891

Claims:

1. An antimutagenic agent comprising a germ preparation selected from the group consisting of wheat germ, wheat germ powder, barley malt, barley malt powder, soybean, soybean poweder, rice bran and extracted fractions thereof, and a pharmaceutically acceptable carrier.

2. An antimutagenic agent according to Claim 1 wherein said germ preparation is selected from the group consisting of wheat germ, wheat germ powder and extracted fractions thereof.

3. An antimutagenic agent according to Claim 1 wherein said germ preparation is selected from the group consisting of barley malt, barley malt powder, soybean, soybean powder, rice bran and extracted fractions thereof.

4. A method of inactivating the mutagenicity of a mutagenic food or beverage by causing the germ preparation of Claim 1 to act on said food, beverage or an in-process material for their production.

5. A method according to Claim 4 wherein said beverage is selected from the group consisting of coffee, black tea and bourbon whiskey.

6. A method according to Claim 5 wherein said beverage is coffee.

7. A method according to Claim 4 wherein said germ preparation is selected from the group consisting of wheat germ, wheat germ powder and extracted fractions thereof.

8. A method according to Claim 4 wherein said germ preparation is selected from the group consisting of barley malt, barley malt powder, soybean, soybean powder, rice bran and extracted fractions thereof.

9. A method according to Claim 4 wherein said germ preparation is caused to act in the presence of hydrogen preoxide.

Fig. 1a

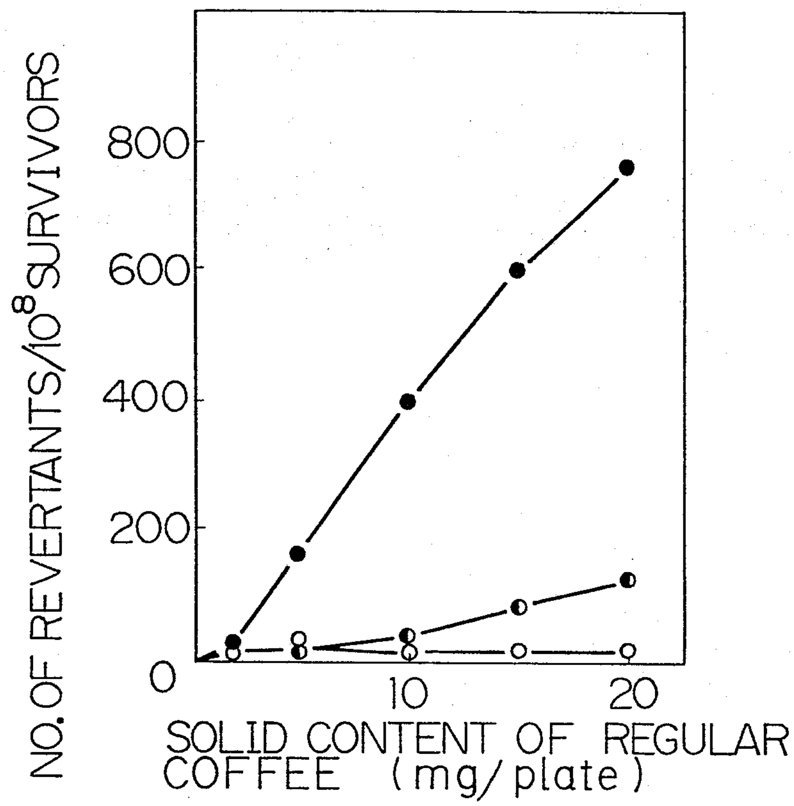
NO. OF REVERTANTS/$10^8$ SURVIVORS
800
600
400
200
0
10
20
SOLID CONTENT OF REGULAR COFFEE (mg/plate)

Fig. 1b

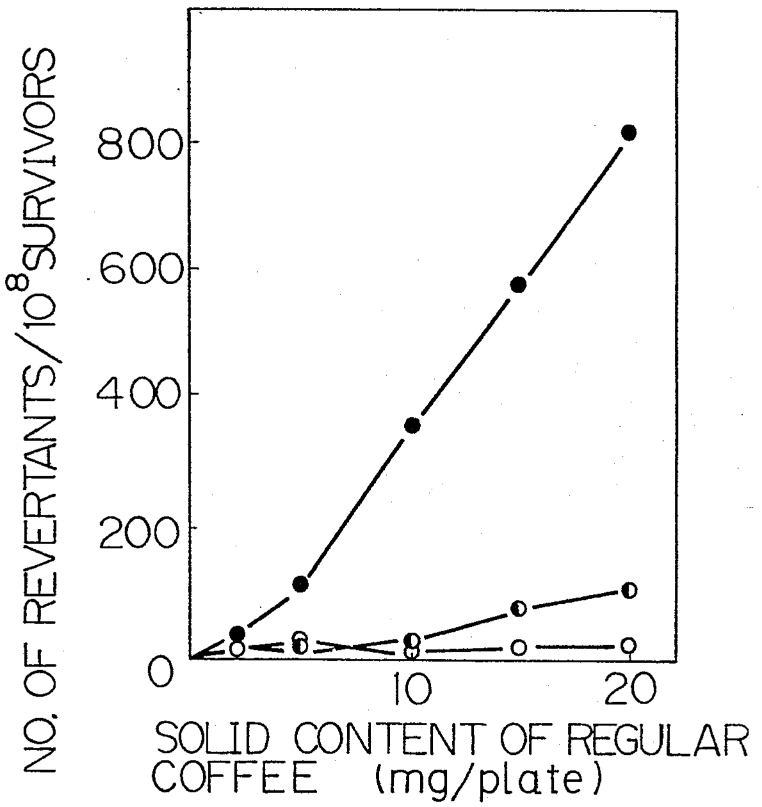
NO. OF REVERTANTS/$10^8$ SURVIVORS
800
600
400
200
0
10
20
SOLID CONTENT OF REGULAR COFFEE (mg/plate)

Fig. 2a

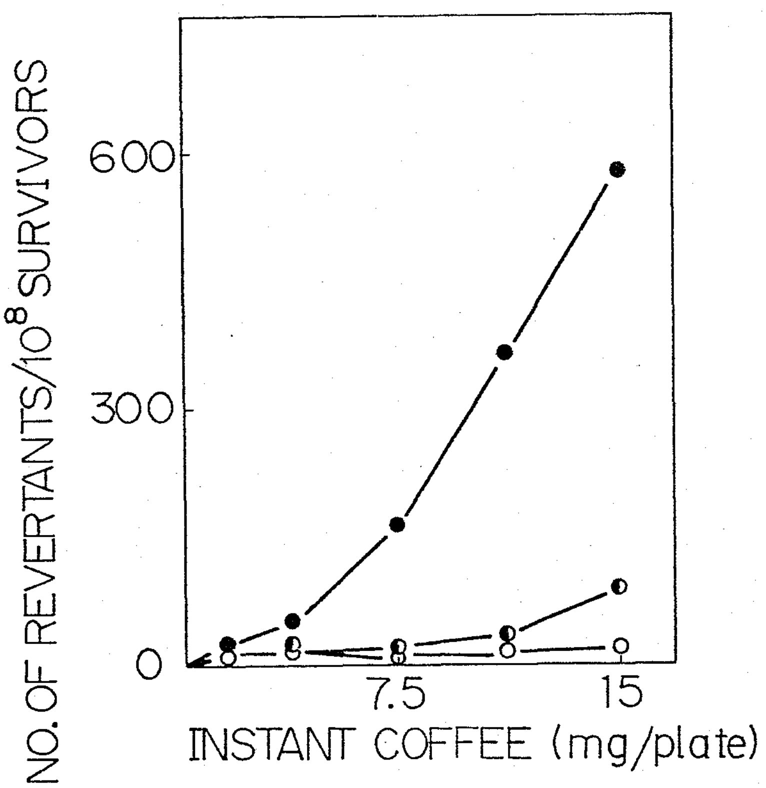
600
300
0
7.5
15
NO. OF REVERTANTS/$10^8$ SURVIVORS
INSTANT COFFEE (mg/plate)

Fig. 2b

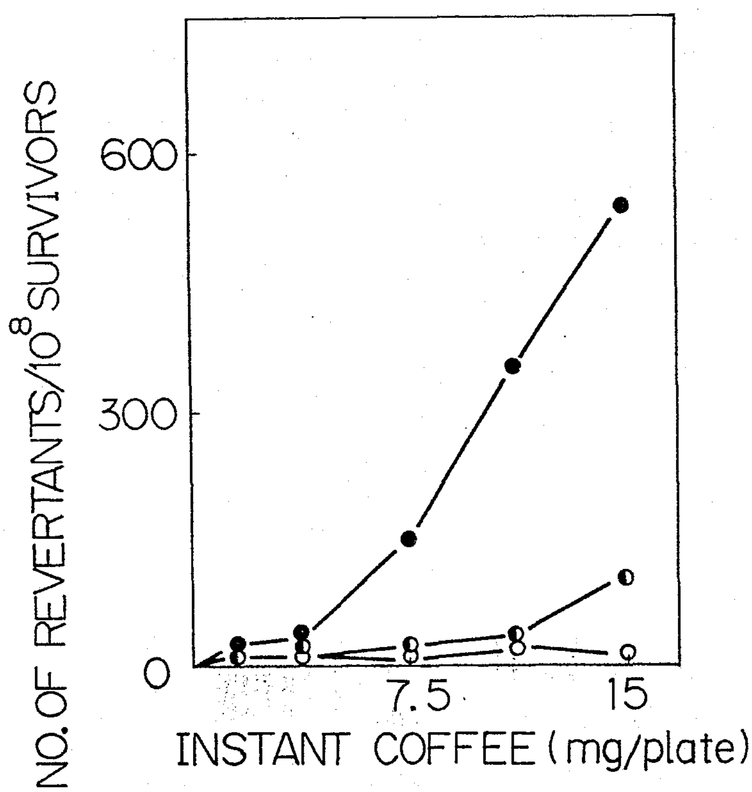
600
300
0
7.5
15
NO. OF REVERTANTS/$10^8$ SURVIVORS
INSTANT COFFEE (mg/plate)

0124891

*Fig. 3a*

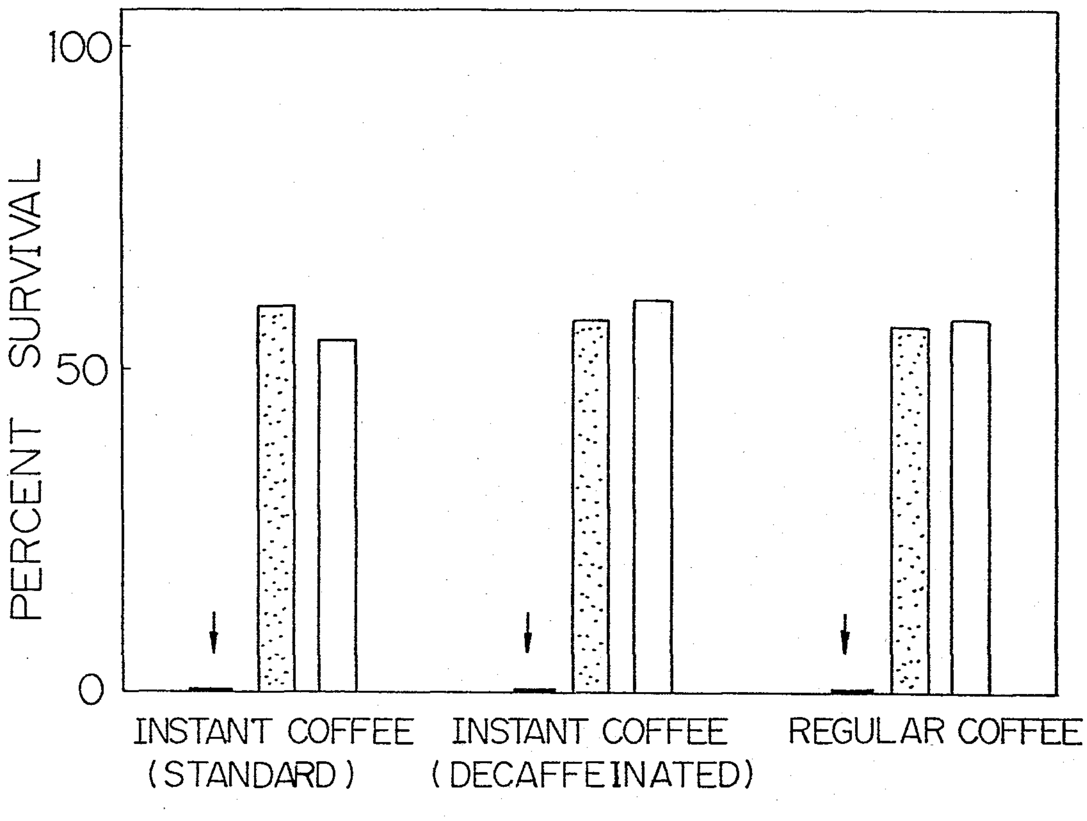

*Fig. 3b*

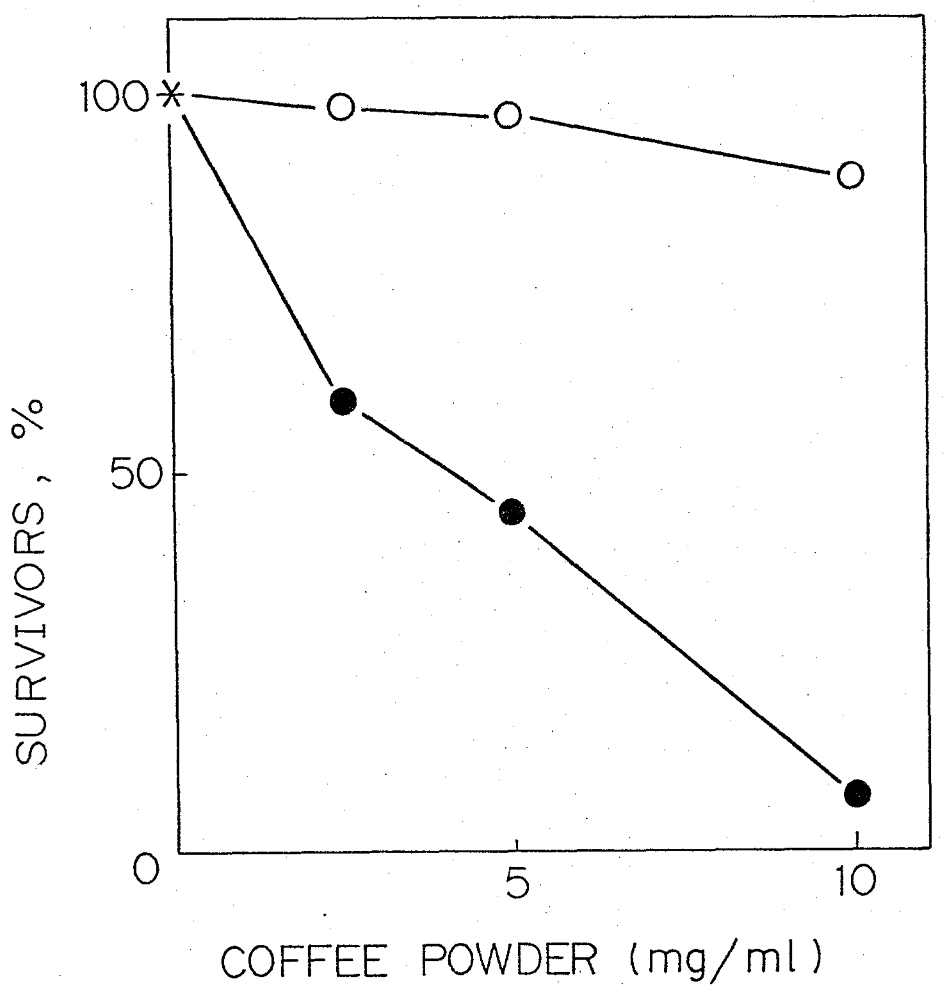

Fig. 4

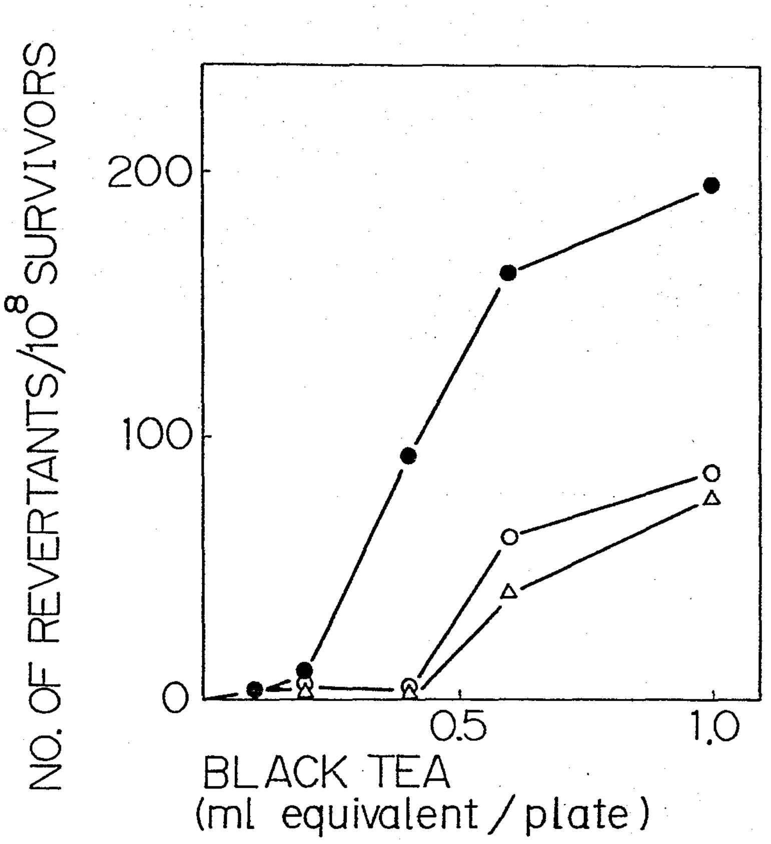
NO. OF REVERTANTS/$10^8$ SURVIVORS
200
100
0
0.5
1.0
BLACK TEA
(ml equivalent / plate)

Fig. 5

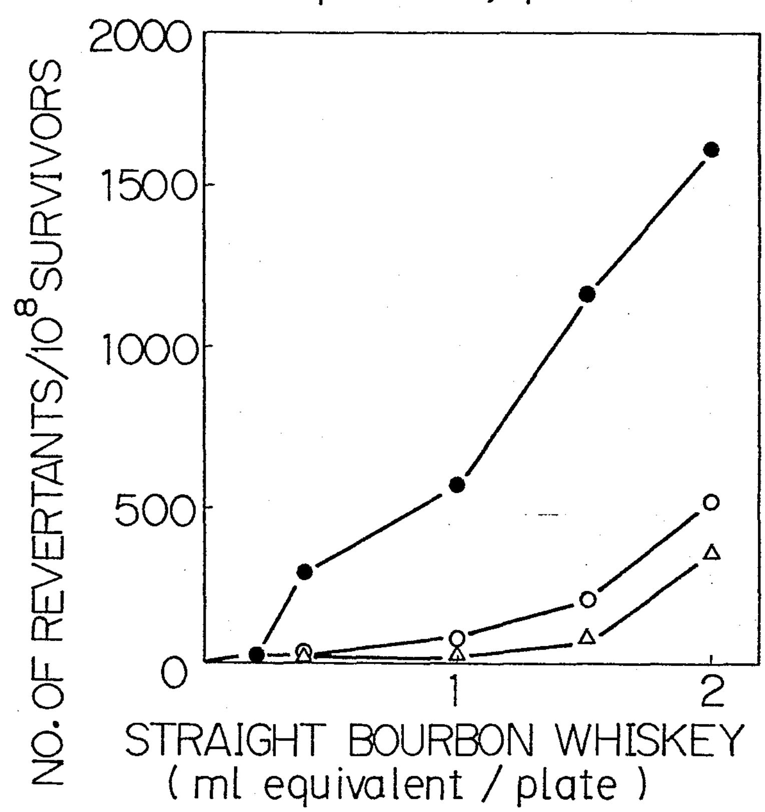
NO. OF REVERTANTS/$10^8$ SURVIVORS
2000
1500
1000
500
0
1
2
STRAIGHT BOURBON WHISKEY
( ml equivalent / plate )

Fig. 6

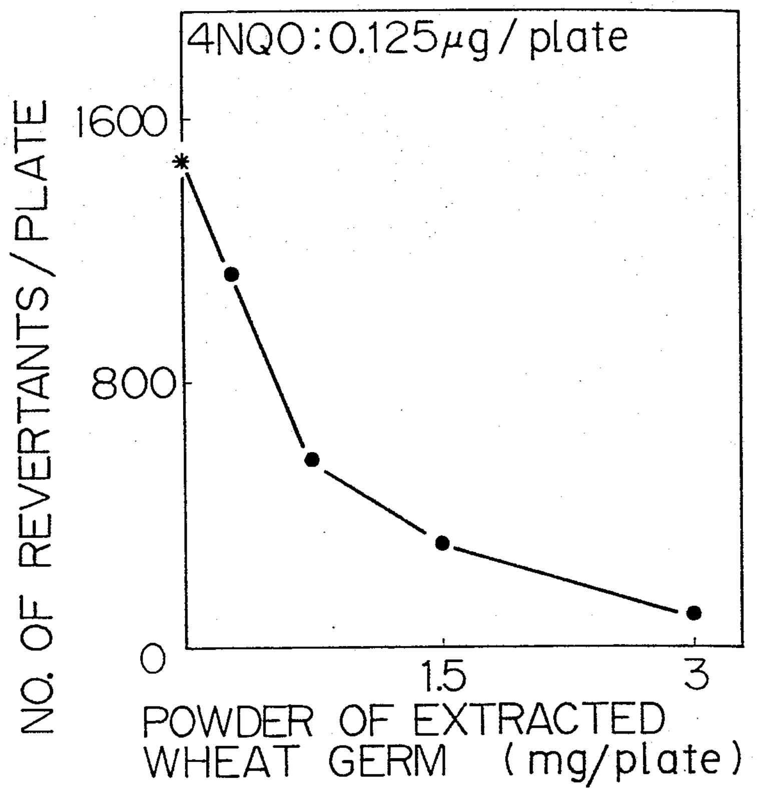
4NQO:0.125μg/plate
NO. OF REVERTANTS/PLATE
1600
800
0
1.5
3
POWDER OF EXTRACTED WHEAT GERM (mg/plate)

Fig. 7

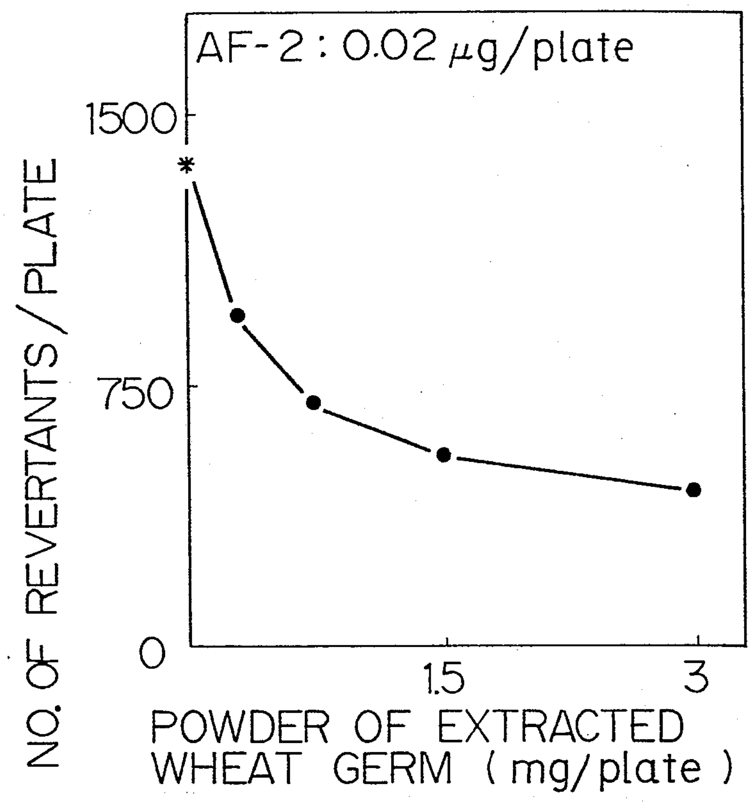
AF-2 : 0.02 μg/plate
NO. OF REVERTANTS/PLATE
1500
750
0
1.5
3
POWDER OF EXTRACTED WHEAT GERM (mg/plate)

Fig. 8

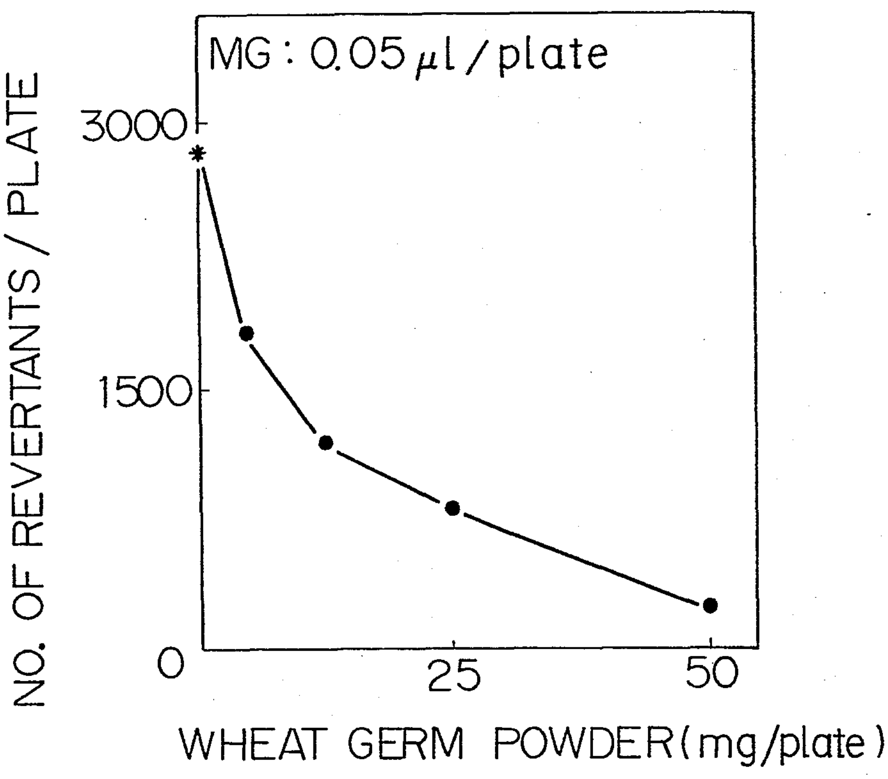
MG : 0.05 µl / plate
NO. OF REVERTANTS / PLATE
3000
1500
0
25
50
WHEAT GERM POWDER (mg/plate)

Fig. 9

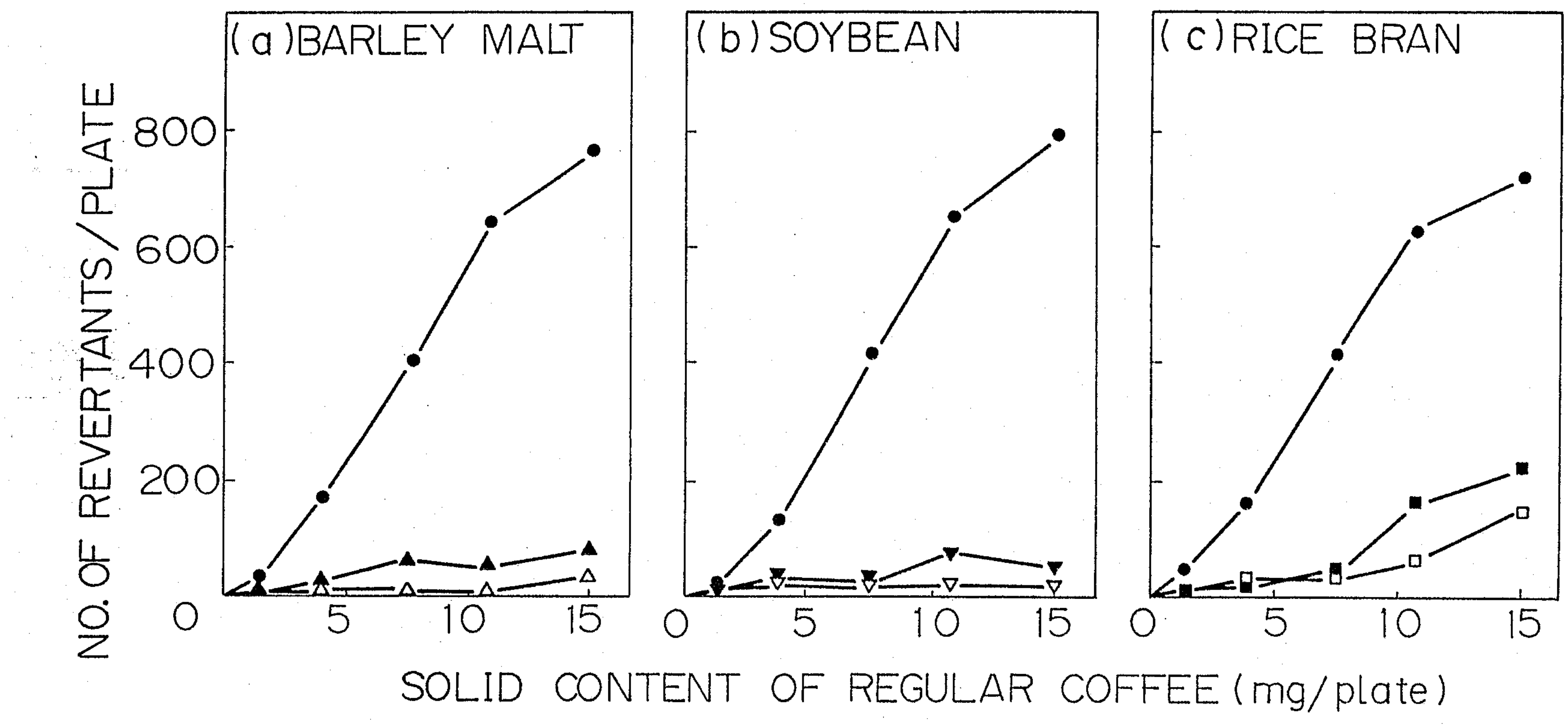
(a)BARLEY MALT
(b)SOYBEAN
(c)RICE BRAN
NO. OF REVERTANTS/PLATE
800
600
400
200
0
5
10
15
SOLID CONTENT OF REGULAR COFFEE (mg/plate)

Fig. 10

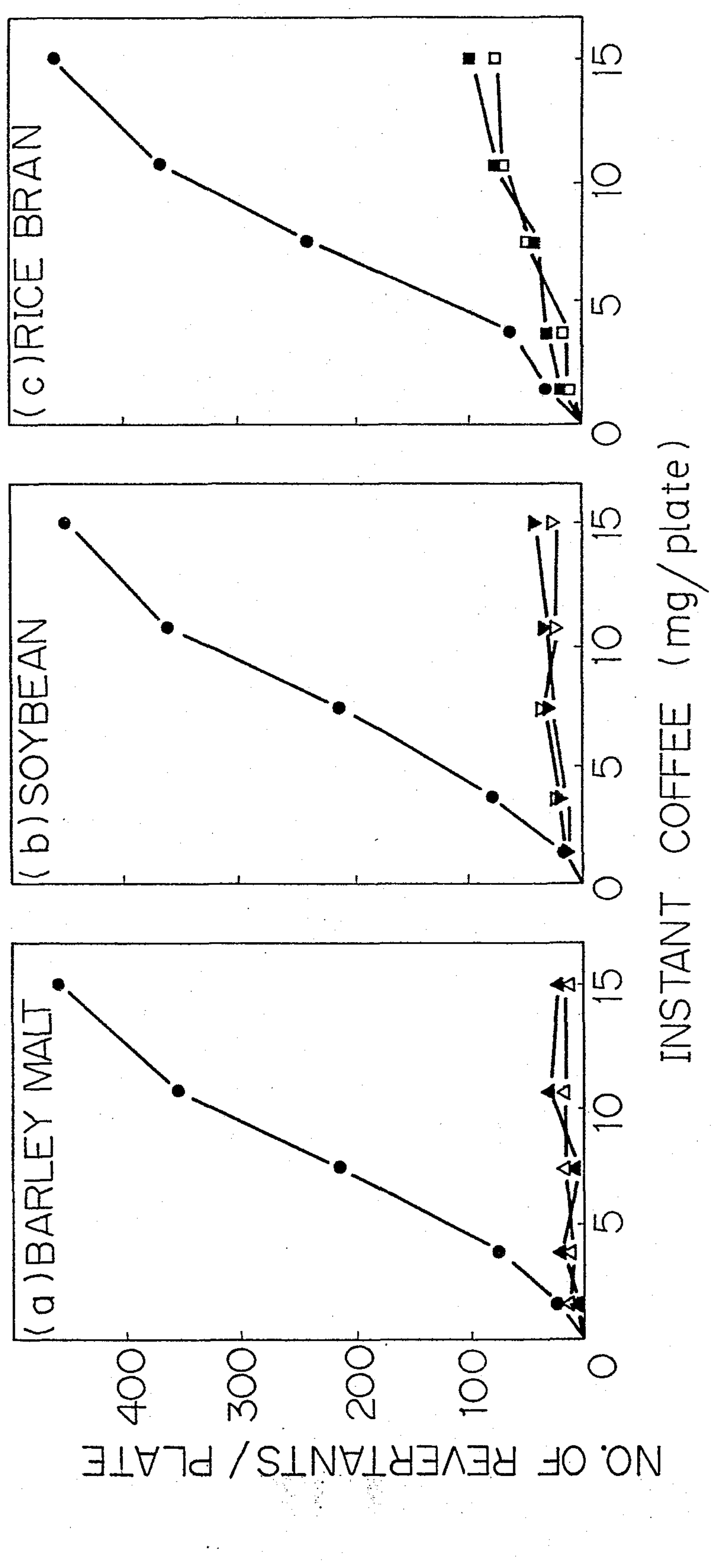
(a) BARLEY MALT
(b) SOYBEAN
(c) RICE BRAN
NO. OF REVERTANTS / PLATE
400
300
200
100
0
5
10
15
INSTANT COFFEE (mg/plate)

# Fig. 11

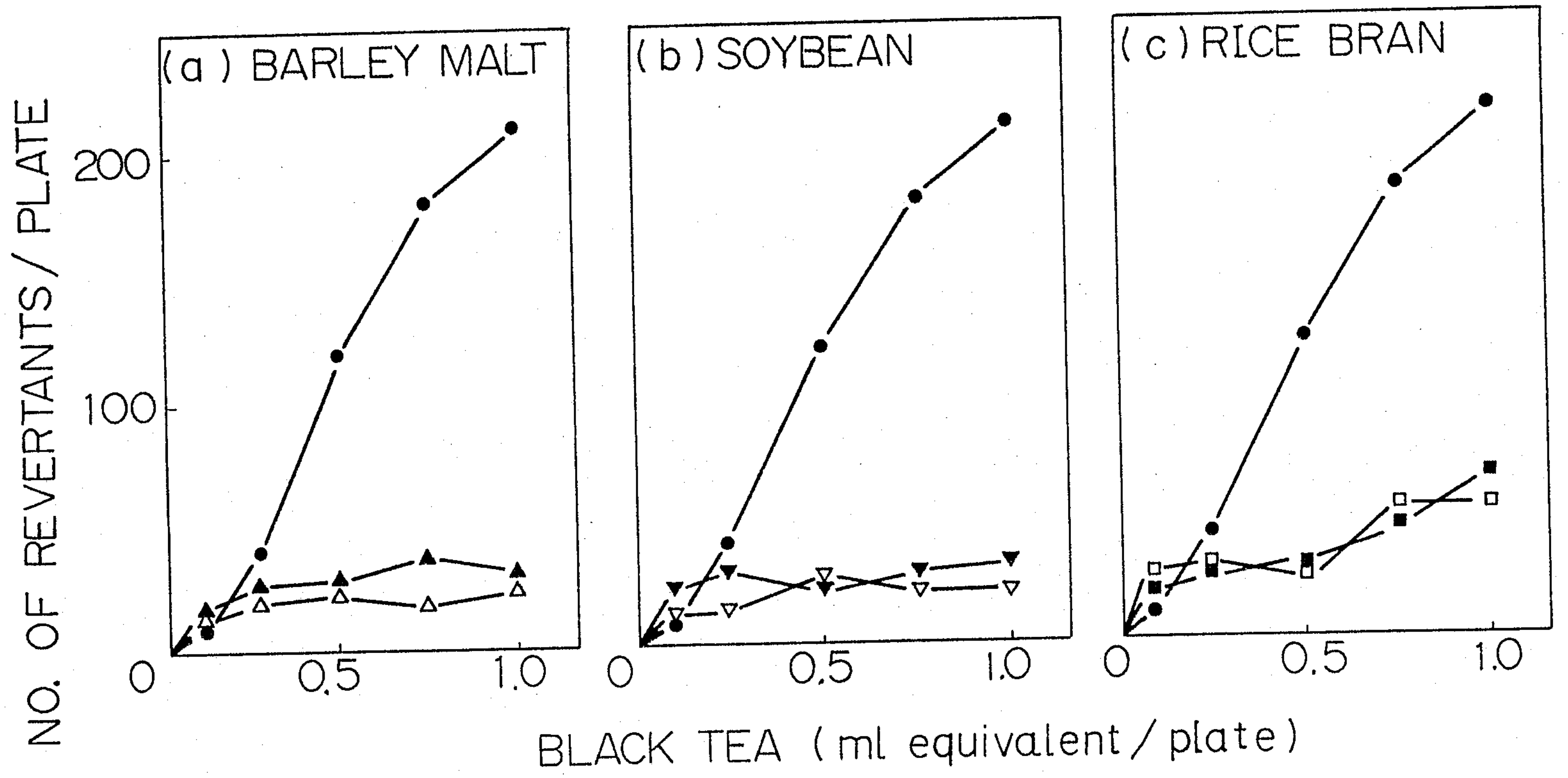
(a) BARLEY MALT
(b) SOYBEAN
(c) RICE BRAN
NO. OF REVERTANTS / PLATE
200
100
0
0.5
1.0
BLACK TEA (ml equivalent / plate)

Fig.12

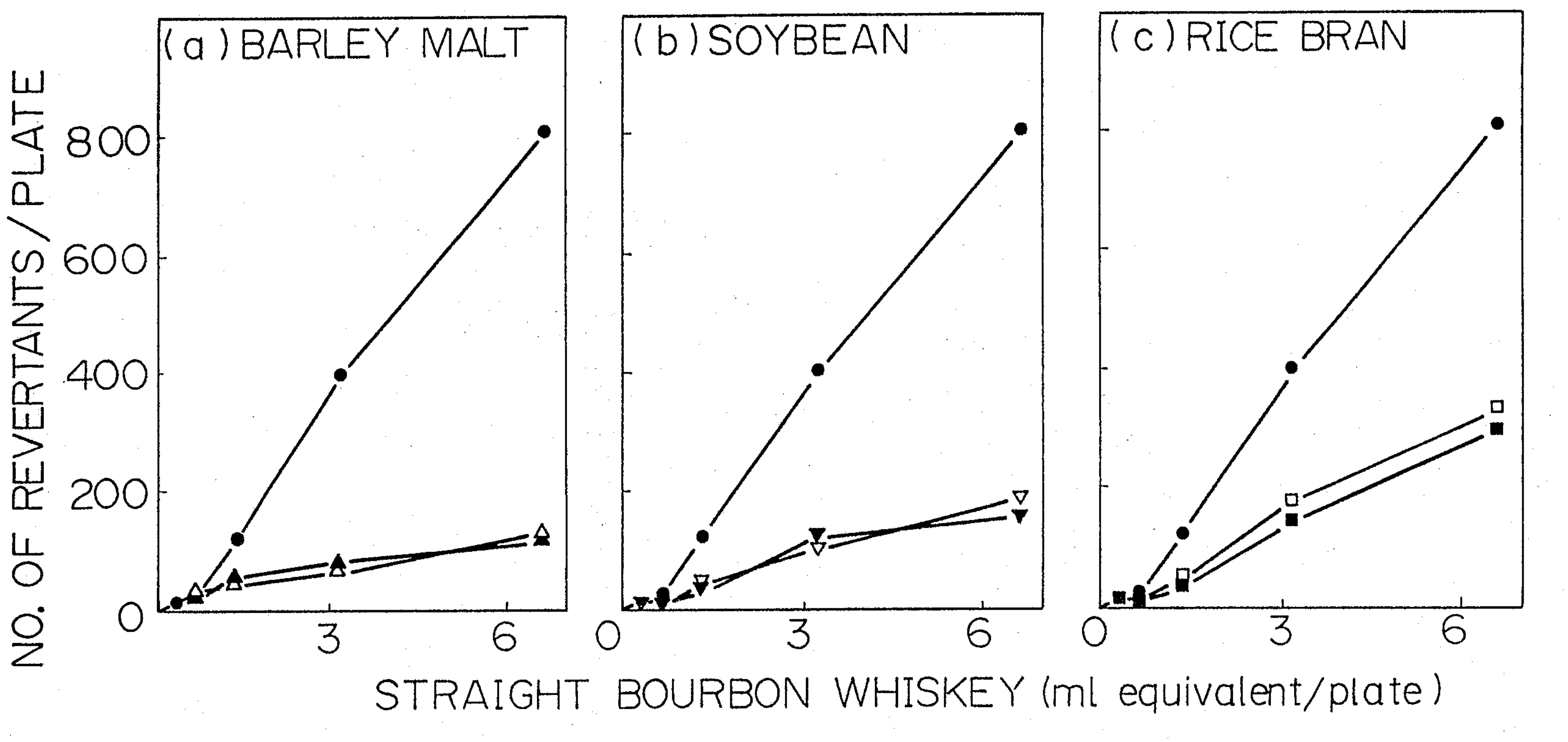
(a) BARLEY MALT
(b) SOYBEAN
(c) RICE BRAN
NO. OF REVERTANTS/PLATE
800
600
400
200
0
3
6
STRAIGHT BOURBON WHISKEY (ml equivalent/plate)